# EUROPEAN PATENT APPLICATION

(11) **EP 1 965 569 A2**
(43) Date of publication of application: **03.09.2008**
(21) Application number: 07021903.5
(22) Date of filing: 12.11.2007
(51) Int. Cl.: H04L 29/12

(54) **Message receiving method, authentication server, application server, and mobile terminal**

(30) Priority: 27.12.2006 JP 2006352745
(71) Applicant: FUJITSU LIMITED, Kawasaki-shi, Kanagawa 211-8588 (JP)
(72) Inventor: Mizuma, Keiji, Kawasaki-shi Kanagawa 211-8588 (JP); Ando, Tatsuhiro, Kawasaki-shi Kanagawa 211-8588 (JP); Suzuki, Hidehiko, Kawasaki-shi Kanagawa 211-8588 (JP)
(74) Representative: HOFFMANN EITLE

(57) **Abstract**

In an authentication server, when a mobile terminal is connected with a mobile network constructed by an IP network, a network-connection authentication of the mobile terminal is performed. A setup of a path from the mobile terminal to a home agent according to a mobile IP is performed after the network- connection authentication is performed. A mobile-management-service authentication of the mobile terminal with the home agent is performed after the setup of the path is performed. The authentication server includes a registration part which is configured to register an IP address of the mobile terminal and a domain name of the mobile terminal to a domain managing server which manages IP addresses and domain names.

## Description

### BACKGROUND OF THE INVENTION

### 1. Field of the Invention

This invention generally relates to a message receiving method, an authentication server, an application server and a mobile terminal, and more particularly to a message receiving method, an authentication server, an application server and a mobile terminal wherein a mobile terminal in a mobile network constructed according to the Internet Protocol (IP) is allowed to receive a message.

### 2. Description of the Related Art

In recent years, the mechanism of a phone system in a mobile network is about to shift to an IP Multimedia Subsystem (IMS) based on the IP (Internet Protocol) architecture. The mobile network based on the IP architecture is required to have the "always-on" connectivity function which is equivalent to that in the architecture of the phone system in the existing mobile network.

In a wireless network, connection between a mobile terminal and a wireless base station may not be kept due to movement of the mobile terminal, etc. In such a case, wireless resources are usually released immediately after the cut-off state because the wireless resources are expensive.

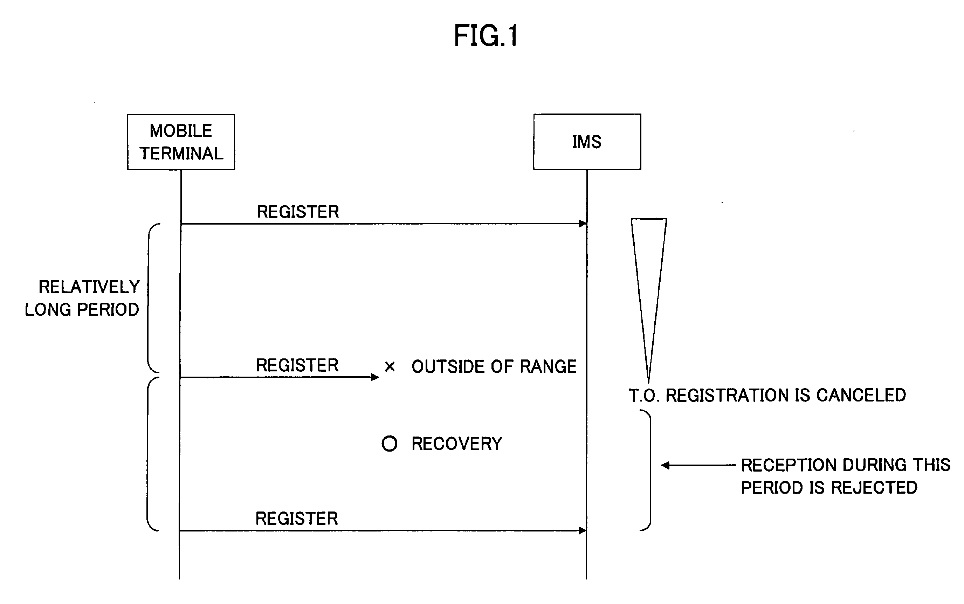

When an application, such as IP phone, is operating, registration of the mobile terminal to the IMS will be canceled if the cut-off state of the wireless connection is continuously kept for a long time. As shown in FIG. 1, when the period of sending a register message from the mobile terminal to the IMS is relatively long, or when the mobile terminal does not perform re-registration, a certain period for which message receiving by the mobile terminal is impossible will arise after restart of the wireless connection.

To obviate the problem, in the third generation network, such as IMT-2000, a short message (SM) is used, instead of using the SIP (Session Initiation Protocol), thereby initiating the mobile terminal.

Moreover, in a WiMAX (Worldwide Interoperability for Microwave Access) system, when an IP packet is received, the wireless connection can be restarted by the wireless paging function and the mobile IP association, so that an IP packet can be sent to the mobile terminal.

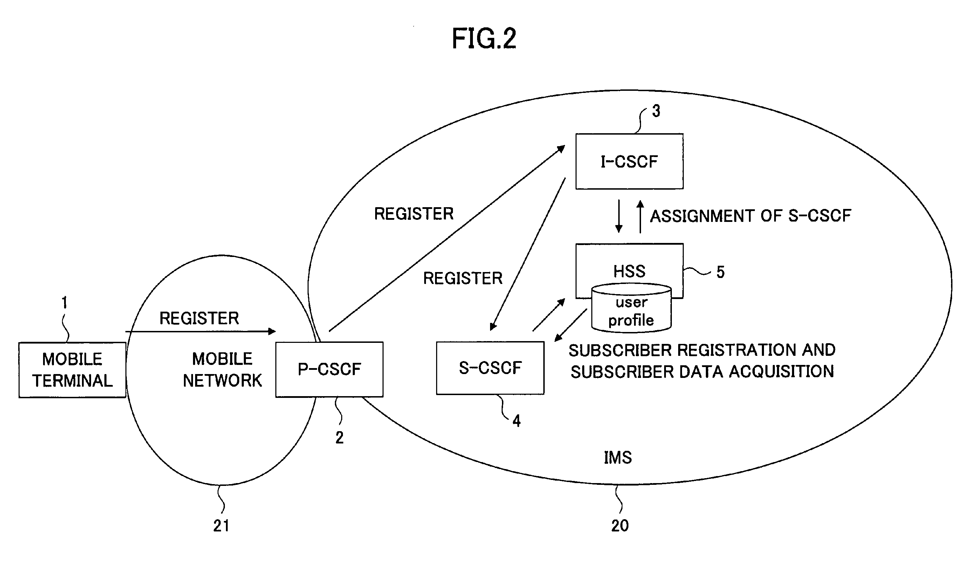

FIG. 2 is a diagram for explaining the mechanism of the IP phone according to the IMS. Since the IMS 20 is based on the premise that mobile terminals move, each mobile terminal is required to register its information on the destination network to the IMS 20.

First, the mobile terminal 1 transmits a REGISTER message according to the SIP to a P-CSCF (Proxy Call Session Control Function) 2 which is discovered in the mobile network 21 to which the mobile terminal 1 is connected.

Subsequently, the P-CSCF 2 transmits a REGISTER message according to the SIP to an I-CSCF (Interrogating Call Session Control Function) 3 in order to assign an S-CSCF (Serving Call Session Control Function) 4 which takes charge of the call control of the mobile terminal 1 in the IMS 20.

Subsequently, the I-CSCF 3 makes an inquiry to a HSS (Home Subscriber Server) 5, chooses the S-CSCF 4, and transmits a REGISTER message according to the SIP to the S-CSCF 4.

Subsequently, the S-CSCF 4 registers its own address and subscriber identification information to the HSS 5, and acquires subscriber data (User Profile) from the HSS 5 so that preparation of the call control to the mobile terminal 1 is completed.

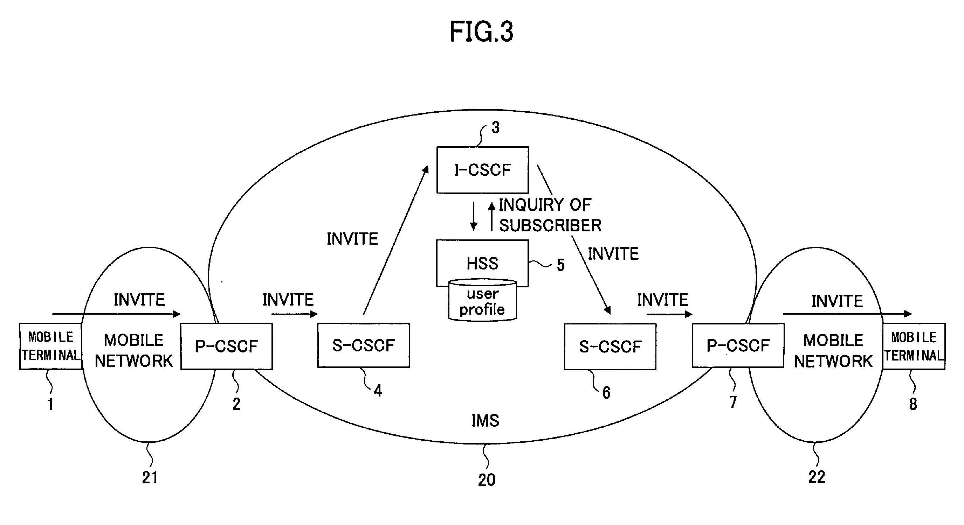

FIG. 3 is a diagram for explaining the transmission and reception of a message in the IMS 20.

First, the mobile terminal 1 transmits an INVITE message according to the SIP, which message is sent to a mobile terminal 8 connected to a mobile network 22, to the P-CSCF 2.

Subsequently, the P-CSCF 2 transmits an INVITE message according to the SIP to the S-CSCF 4, and the S-CSCF 4 transmits an INVITE message according to the SIP to the I-CSCF 3, in order to transmit an INVITE message according to the SIP to the S-CSCF 6 which is currently assigned to the mobile terminal 8.

Subsequently, the I-CSCF 3 makes an inquiry to the HSS 5, acquires from the HSS 5 the address of the S-CSCF 6 currently assigned to the mobile terminal 8, and transmits an INVITE message according to the SIP to the S-CSCF 6.

Subsequently, the S-CSCF 6 transmits an INVITE message according to the SIP to the P-CSCF 7, and the P-CSCF 7 transmits an INVITE message according to the SIP to the mobile terminal 8, so that the INVITE message according to the SIP is received at the mobile terminal 8.

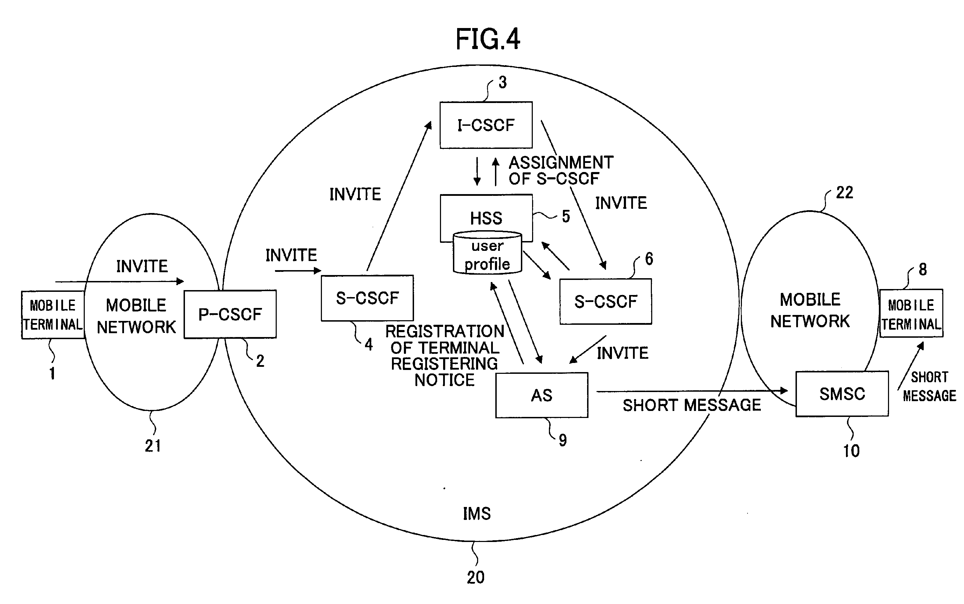

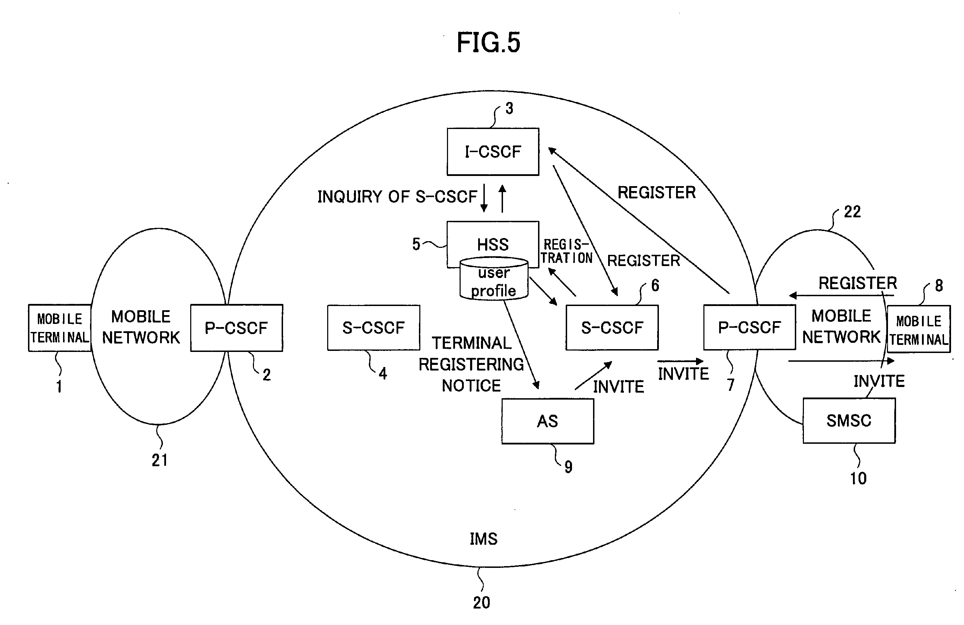

FIG. 4 and FIG. 5 are diagrams for explaining message transmission and reception processing when the mobile terminal 8 is a non-registered terminal. FIG. 4 shows the processing in which message receiving is notified to the mobile terminal 8 by transmitting a short message to the mobile terminal 8. FIG. 5 shows the processing in which the mobile terminal 8 performs registration and receives an INVITE message according to the SIP when the short message is received.

In the processing of FIG. 4, the mobile terminal 1 first transmits an INVITE message according to the SIP, which message is sent to the mobile terminal 8, to the P-CSCF 2. And the P-CSCF 2 transmits an INVITE message according to the SIP to the S-CSCF 4.

Subsequently, the S-CSCF 4 transmits an INVITE message according to the SIP to the I-CSCF 3, in order to transmit an INVITE message according to the SIP to the S-CSCF which is currently assigned to the mobile terminal 8.

The I-CSCF 3 makes an inquiry the HSS 5 about the S-CSCF currently assigned to the mobile terminal 8. However, it is not registered in this case. The S-CSCF 6 is newly assigned, and the I-CSCF 3 transmits an INVITE message according to the SIP to the S-CSCF 6.

Since the S-CSCF 6 does not have any information of the mobile terminal 8, the S-CSCF 6 acquires the subscriber data of the mobile terminal 8 from the HSS 5. When execution of the AS (Application Server) 9 is instructed as operation at the time of message receiving in the non-registered case by the acquired subscriber data, the S-CSCF 6 transmits an INVITE message according to the SIP to the AS 9.

The AS 9 transmits a short message to the mobile terminal 8 via the SMSC (Short Message Service Center) 10 in order to cause the mobile terminal 8 to perform registration. Moreover, before transmitting the short message, the AS 9 performs registration so that, when registration to the HSS 5 is performed by the mobile terminal 8, the AS 9 may be notified of the registration.

In the processing of FIG. 5, when the short message is received from the AS 9, the mobile terminal 8 transmits a REGISTER message according to the SIP to the P-CSCF 7 for registration. The P-CSCF 7 transmits a REGISTER message according to the SIP to the I-CSCF 3, in order to assign the S-CSCF 6 which takes charge of the call control of the mobile terminal 8.

The I-CSCF 3 makes an inquiry to the HSS 5, chooses the S-CSCF 6, and transmits a REGISTER message according to the SIP to the S-CSCF 6. The S-CSCF 6 registers its own address and subscriber identification information into the HSS 5 and acquires subscriber data (User Profile) from the HSS 5 so that preparation of the call control to the mobile terminal 8 is completed.

The HSS 5 notifies the registration of the mobile terminal 8 to the AS 9. The AS 9 transmits the INVITE message, previously received from the S-CSCF 6, to the S-CSCF 6. The S-CSCF 6 transmits the INVITE message according to the SIP to the mobile terminal 8 via the P-CSCF 7. Thus, the receiving of the INVITE message according to the SIP at the mobile terminal 8 is carried out.

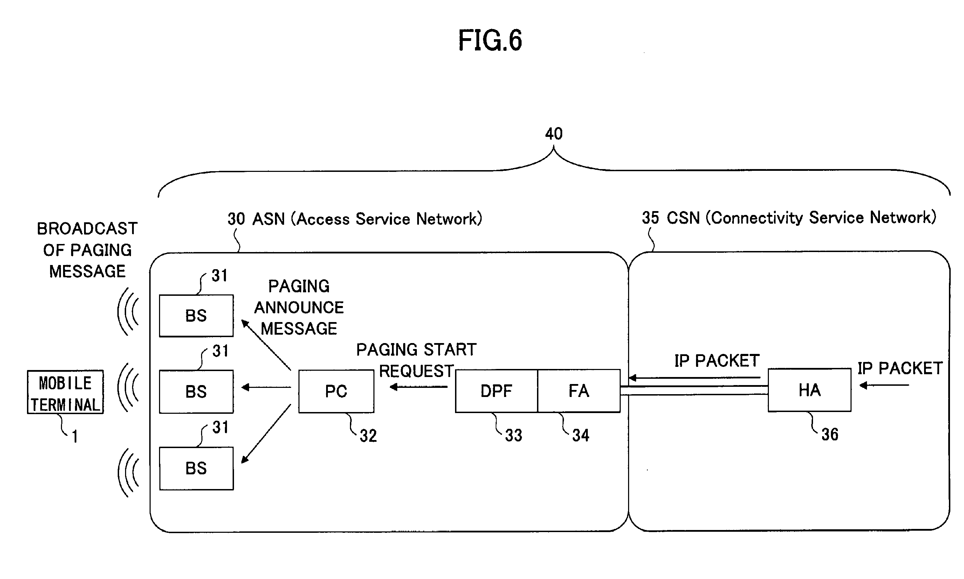

FIG. 6 is a diagram for explaining the relationship between mobile management and wireless resource management in the WiMAX system when the arrival of an IP packet occurs at a mobile terminal which is in an idle mode (the mobile terminal is in a state where wireless resources are released and wireless connection is not established).

As shown in FIG. 6, if a HA (Home Agent) 36 of a CSN (Connectivity Service Network) 35, which constitutes part of a WiMAX mobile network 40, receives an IP packet to the mobile terminal 1, the HA 36 transmits the IP packet to a DPF (Data Path Function) 33. The DPF 33 is associated with an FA (Foreign Agent) 34 of an ASN (Access Service Network) 30. The DPF 33 is provided to manage the data path in the ASN 30, and the DPF 33 requests a PC (Paging Controller) 32 to start the paging of the mobile terminal 1.

The PC 32 checks the position of the mobile terminal and transmits a paging announcement message to one or more BSs (Base Stations) 31 existing in the paging area.

The BS 31 broadcasts a paging message. In response to the paging message, the mobile terminal 1 is released from the idle mode and set to a wireless connection state.

Japanese Laid-Open Patent Application No. 2003-348174 discloses that an SIP server performs the conversion of IP address, which is required by the use of different domains of a transmitting mobile terminal and a receiving mobile terminal, by making reference to a DNS-ALG (DNS application level gateway) at the time of receiving a message by the mobile terminal.

Japanese Laid-Open Patent Application No. 2006-115453 discloses that a registration procedure of an address (care of address) acquired in the visiting network is performed between the mobile node and a HA (home agent) server, a registration procedure of the address (care of address) is performed between the mobile node and a SIP server, and a communication procedure between the mobile node and the communication-partner node is performed through the SIP server without using the HA server.

Japanese Laid-Open Patent Application No. 2005-340982 discloses that, in order to perform service execution in the area of the visiting network, CoA (care of address) as position information is required and the position information is registered in a presence server.

Although the WiMAX system takes the IP-packet level receiving measures, the WiMAX system still has the problem that is the same that of the 3G system as for the application level receiving measures like the IMS. In addition, the mobile IP is used in the WiMAX system, and there is the difficulty in maintaining association of the mobile IP and the IMS.

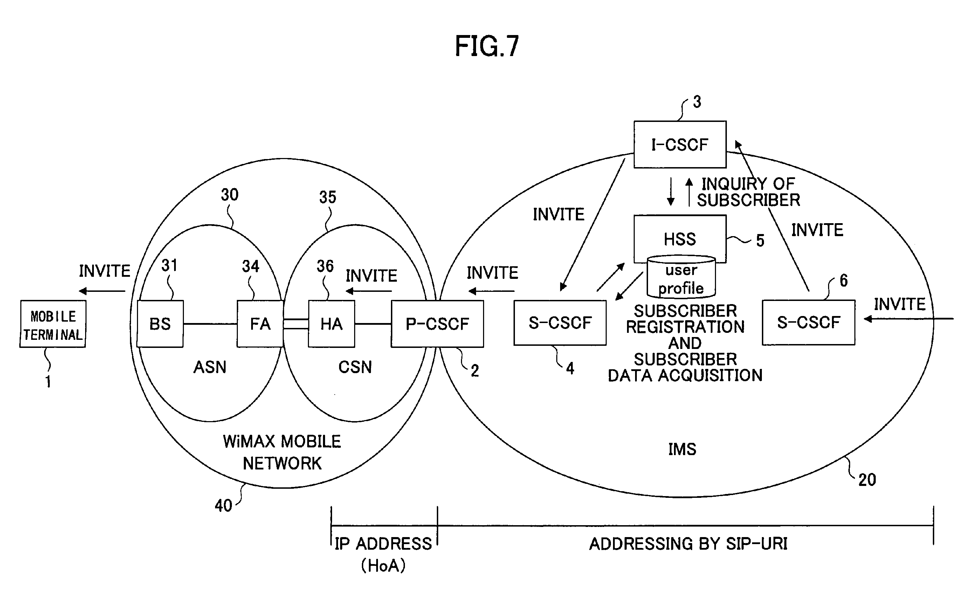

FIG. 7 is a diagram for explaining the association of the mobile IP and the IMS in the WiMAX system at the time of receiving an INVITE message according to the SIP at the mobile terminal 1. Suppose that the mobile terminal 1 is registered in the IMS.

As shown in FIG. 7, the S-CSCF 6, which is assigned to a transmitting mobile terminal (which is not shown), receives an INVITE message according to the SIP from the transmitting mobile terminal. The S-CSCF 6 transmits an INVITE message according to the SIP to the I-CSCF 3, in order to transmit the INVITE message according to the SIP to the S-CSCF 4 which is currently assigned to the mobile terminal 1.

The I-CSCF 3 makes an inquiry to the HSS 5, acquires the address of the S-CSCF 4 currently assigned to the mobile terminal 1, and transmits an INVITE message according to the SIP to the S-CSCF 4.

The S-CSCF 4 transmits an INVITE message according to the SIP to the P-CSCF 2 and the P-CSCF 2 transmits it to the HA 36, so that the INVITE message according to the SIP is sent the HA 36 to the mobile terminal 1 through the FA 34 and the BS 31.

In the processing of FIG. 7, the SIP-URI (in the form of username@domain) is used as a destination address of the mobile terminal 1 within the IMS 20. Since a different address is assigned to the mobile terminal 1 which address is converted according to the visiting network, the IP address of the mobile terminal 1 is not used within the IMS 20.

On the other hand, it is necessary to convert the destination address of the mobile terminal 1 into an IP address for use in the WiMAX mobile network 40. Namely, in order to perform a path setup by a mobile IP, the HoA (Home Address), which is assigned to the HA 36 when the mobile terminal 1 is connected with the WiMAX mobile network, serves as an IP address of the mobile terminal 1. For this reason, the P-CSCF 2 will manage the association of the SIP-URI and the IP address (HoA) at the time of registration of the mobile terminal 1 to the IMS.

However, as depicted with reference to FIG. 4, when the IMS registration of the mobile terminal 1 is not performed, the SIP message cannot be transmitted to the mobile terminal 1.

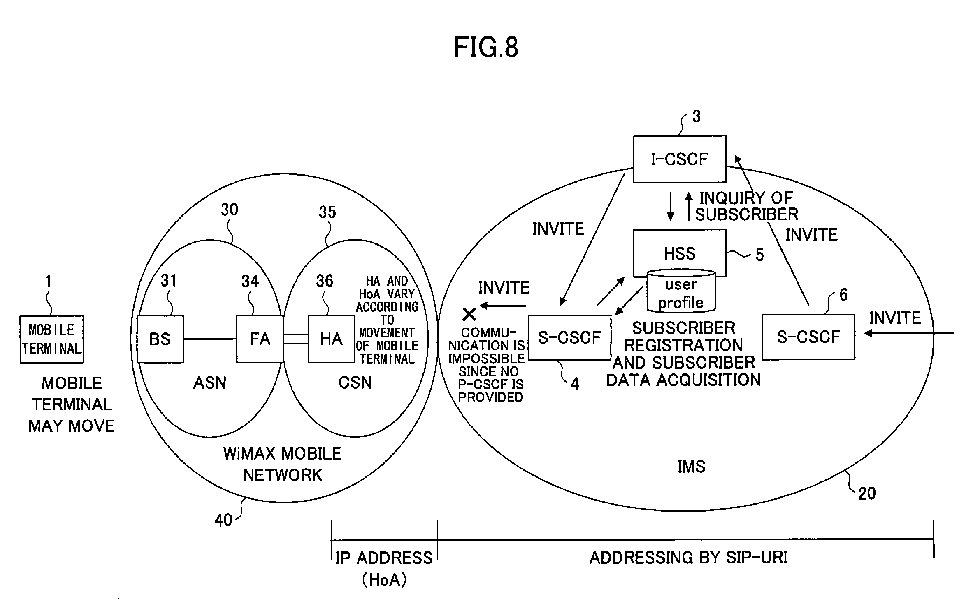

FIG. 8 shows the case in which the IMS registration of a mobile terminal 1 is not performed in the WiMAX system. As shown in FIG. 8, since the WiMAX system has no mechanism of transmitting a short message, there is the problem that the method of transmitting a short message as depicted with reference to FIG. 4 cannot be used in the WiMAX system.

### SUMMARY OF THE INVENTION

According to one aspect of the invention, there is disclosed an improved message receiving method in which the above-described problems are eliminated.

According to one aspect of the invention, there are disclosed a message receiving method, an authentication server, and an application server in which a non-registered mobile terminal in an IP network is allowed to receive a message sent to the non-registered mobile terminal.

In an embodiment of the invention which solves or reduces one or more of the above-mentioned problems, there is disclosed an authentication server comprising: a network-connection authentication part configured to perform, when a mobile terminal is connected with a mobile network constructed by an IP network, a network-connection authentication of the mobile terminal; a path setup part configured to perform a setup of a path from the mobile terminal to a home agent according to a mobile IP after the network- connection authentication is performed; a mobile-management-service authentication part configured to perform a mobile-management-service authentication of the mobile terminal with the home agent after the setup of the path is performed; and a registration part configured to register an IP address of the mobile terminal and a domain name of the mobile terminal to a domain managing server which manages IP addresses and domain names.

The above-mentioned authentication server may be arranged to further comprise an ENUM conversion part configured to convert, into a domain name in an ENUM form, a phone number of the mobile terminal, which is acquired from a subscriber management server of the IP network when the network connection authentication of the mobile terminal is performed, so that the domain name into which the acquired phone number is converted in the ENUM form is registered into the domain managing server as the domain name of the mobile terminal.

In an embodiment of the invention which solves or reduces one or more of the above-mentioned problems, there is disclosed an application server of an IP network to which a mobile network is connected, the application server comprising: an ENUM conversion part configured to convert, when an incoming message to a non-registered mobile terminal is supplied to a subscriber management server of the IP network, a phone number of the mobile terminal into a domain name in an ENUM form; and a reference part configured to acquire an IP address of the mobile terminal by making reference to a domain managing server using the domain name in the ENUM form produced by the ENUM conversion part.

The above-mentioned application server may be arranged so that the application server is provided to use a session start protocol in the IP network.

The above-mentioned application server may be arranged to further comprise a registration request part configured to transmit a registration request message to the mobile terminal having the IP address acquired by the reference part.

The above-mentioned application server may be arranged to further comprise a notice request part configured to request, before the registration request message is transmitted by the registration request part, the subscriber management server to transmit a notice of end of registration to the mobile terminal to which the registration request message is transmitted, at a time of completion of the registration of the mobile terminal.

The above-mentioned application server may be arranged to further comprise a received message transmitting part configured to transmit the received message to the mobile terminal when the notice of end of registration is received from the subscriber management server.

In an embodiment of the invention which solves or reduces one or more of the above-mentioned problems, there is disclosed a mobile terminal for use with an application server of an IP network to which a mobile network is connected, the application server comprising: an ENUM conversion part configured to convert, when an incoming message to a non-registered mobile terminal is supplied to a subscriber management server of the IP network, a phone number of the mobile terminal into a domain name in an ENUM form; and a reference part configured to acquire an IP address of the mobile terminal by making reference to a domain managing server using the domain name in the ENUM form produced by the ENUM conversion part, the mobile terminal comprising a registration execution part configured to transmit a registration message to the subscriber management server of the IP network when a registration request message is received from the subscriber management server.

In an embodiment of the invention which solves or reduces one or more of the above-mentioned problems, there is disclosed a message receiving method of a mobile network built by an IP network, in which an application server is included in the IP network and an authentication server performs, when a mobile terminal is connected with the mobile network, a network connection authentication of the mobile terminal, performs a setup of a path from the mobile terminal to a path setup to a home agent according to a mobile IP, and performs a mobile management service authentication of the mobile terminal with the home agent after the setup of the path is performed, the message receiving method comprising: causing the authentication server to convert, into a domain name in an ENUM form, a phone number of the mobile terminal which is acquired from a subscriber management server of the IP network when the network connection authentication of the mobile terminal is performed; causing the authentication server to register the domain name into which the acquired phone number is converted in the ENUM form, into a domain managing server which manages IP addresses and domain names; causing the application server to convert, when an incoming message to a non-registered mobile terminal is supplied to the subscriber management server of the IP network, a phone number of the non-registered mobile terminal into a domain name in the ENUM form; causing the application server to acquire an IP address of the non-registered mobile terminal by making reference to the domain managing server using the domain name in the ENUM form; causing the application server to transmit a registration request message to the non-registered mobile terminal at the acquired IP address; causing the non-registered mobile terminal to transmit a registration message to the subscriber management server of the IP network when the registration request message is received; causing the application server to request, before transmitting the registration request message, the subscriber management server to transmit a notice of end of registration of the non-registered mobile terminal at a time of completion of the registration of the mobile terminal; and causing the application server to transmit the incoming message to the non-registered mobile terminal when the notice of end of registration is received from the subscriber management server.

The above-mentioned message receiving method may be arranged so that a session start protocol is used in the IP network.

According to the message receiving method, the authentication server, and the application server of the embodiments of the invention, a non-registered mobile terminal in an IP network is allowed to receive a message sent to the non-registered mobile terminal.

### BRIEF DESCRIPTION OF THE DRAWINGS

Other objects, features and advantages of the present invention will become more apparent from the following detailed description when read in conjunction with the accompanying drawings.

FIG. 1 is a diagram for explaining the situation in which message receiving by a mobile terminal is impossible when the period of sending a register message from the mobile terminal to an IMS is relatively long.

FIG. 2 is a diagram showing the composition of an IP phone mechanism in the IMS.

FIG. 3 is a diagram for explaining message transmission and reception processing which is performed by the IMS.

FIG. 4 is a diagram for explaining message transmission and reception processing when a mobile terminal is a non-registered terminal.

FIG. 5 is a diagram for explaining message transmission and reception processing when a mobile terminal is a non-registered terminal.

FIG. 6 is a diagram for explaining the relationship between mobile management and wireless resource management in the WiMAX system.

FIG. 7 is a diagram for explaining the association of the mobile IP and the IMS in the WiMAX system at the time of receiving an INVITE message according to the SIP at the mobile terminal.

FIG. 8 is a diagram for explaining the case in which IMS registration of a mobile terminal is not performed in the WiMAX system.

FIG. 9 is a diagram for explaining the DNS registration in an embodiment of the invention.

FIG. 10 is a diagram for explaining the message receiving processing which is performed to the non-registered mobile terminal in an embodiment of the invention.

FIG. 11 is a diagram for explaining the call control processing which is performed upon retransmission of the INVITE message in an embodiment of the invention.

FIG. 12 is a block diagram showing the functional composition of an AAA authentication server in an embodiment of the invention.

FIG. 13 is a block diagram showing the functional composition of an application server (AS) in an embodiment of the invention.

### DETAILED DESCRIPTION OF THE PREFERRED EMBODIMENTS

A description will be given of embodiments of the invention with reference to the accompanying drawings.

According to the principle of the invention, DNS (Domain Name Server) registration of an IP address (HoA) and a phone number of a mobile terminal is performed so that the IP multimedia subsystem (IMS) is allowed to transmit a SIP message which is received with respect to a non-registered mobile terminal, to a home server (HA). For this reason, it is necessary that a phone number is given to the mobile terminal in advance.

A DNS server has an ENUM (E. 164 Number Mapping) function and converts a phone number of a mobile terminal into a domain name in conformity with the ITU-T recommendation E.164, so that the mobile terminal can be searched using the domain name. Since the DNS server is provided to perform conversion between a domain name and an IP address, the DNS server cannot perform conversion between an SIP-URI (in the form of username@domain) and an IP address.

For this reason, the domain name to which the phone number is converted in the ENUM form, and the IP address (HoA) are registered, and the phone number is converted into the domain name by using the ENUM function of the DNS server. In order to perform this conversion, the domain name into which the phone number is converted in the ENUM form is needed at the time of DNS registration and searching.

An authentication server is arranged to perform DNS registration at the time of HA authentication when a setup of a mobile IP of a mobile terminal is performed. The authentication server acquires subscriber data from the Home Subscriber Server (HSS) at the time of network connection authentication of the mobile terminal, converts a phone number contained in the acquired subscriber data into a domain name in the ENUM form, and performs the DNS (ENUM) registration using the domain name at the time of the HA authentication.

When the Serving Call Session Control Function (S-CSCF) of the receiving side receives a message to a non-registered mobile terminal and the application server (AS) is initiated, the AS performs the DNS searching mentioned above. The AS acquires the subscriber data from the HSS and performs the DNS (ENUM) searching using the domain name into which the phone number, contained in the acquired subscriber data, is converted in the ENUM form.

Accordingly, when a message to a non-registered mobile terminal arrives at the IMS, the IMS can transmit an SIP message to the HA.

The mobile terminal of the invention is arranged to have the function of performing IMS registration when an SIP message to a mobile terminal which is not yet registered in the IMS is received. The IMS transmits the SIP message to the mobile terminal again after the IMS registration of the mobile terminal is performed, so that subsequent call control processing is made in progress.

In order to resend an SIP message at the end of the IMS registration of the mobile terminal and to advance the call control processing, the AS requests the HSS to send back a notice of end of registration of the mobile terminal, before transmitting the SIP message to the HA.

And when the AS receives the notice of end of registration of the mobile terminal from the HSS, the AS transmits an SIP message to the receiving S-CSCF, and the receiving S-CSCF is made to transmit the SIP message to the mobile terminal during the normal IMS call control processing.

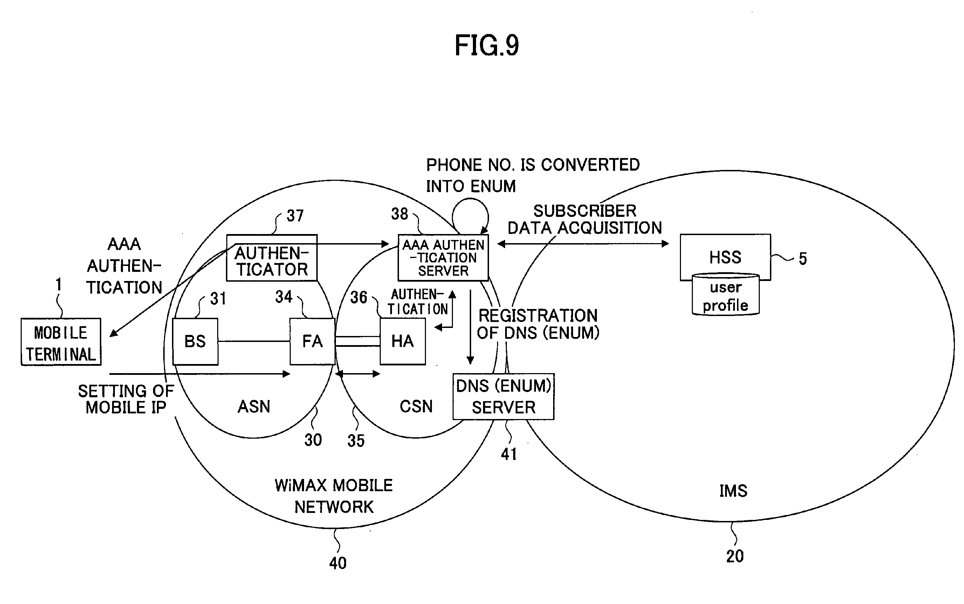

FIG. 9 through FIG. 11 are diagrams for explaining the composition of an authentication server and an application server in an embodiment of the invention.

In FIG. 9 through FIG. 11, the Proxy Call Session Control Function (P-CSCF) 2 of the IMS 20 is a connection point for connecting with the IMS from the network to which each mobile terminal is connected, respectively. The Interrogating Call Session Control Function (I-CSCF) 3 performs assignment of the S-CSCF 4 or 6 which takes charge of call control to each mobile terminal 1, and performs making reference of the communication-partner mobile terminal. The Serving Call Session Control Function (S-CSCF) 4 or 6 takes charge of call control to each mobile terminal 1, respectively. The Home Subscriber Server (HSS) 5 manages subscriber data.

The application server (AS) 42 is provided in order to perform special processing in the call control processing. The AS 42 transmits a short message to a mobile terminal, and converts the phone number into the domain name in the ENUM form, and searches the DNS (ENUM) server 41 using the domain name.

The Base Station (BS) 31 in the Access Service Network (ASN) 30 of the WiMAX mobile network 40 performs wireless connection to the mobile terminal 1. The Foreign Agent (FA) 34 performs path control of the mobile terminal 1 according to the mobile IP. The authenticator 37 serves as an authentication client within the network when performing authentication of the mobile terminal with the AAA authentication server 38.

The Home Agent (HA) 36 in the Connectivity Service Network (CSN) 35 of the WiMAX mobile network 40 performs path control of the mobile terminal according to the mobile IP. The AAA authentication server 38 performs authentication of the network connection of the mobile terminal, and mobile IP authentication. The AAA authentication server 38 has the functions of converting the phone number of the mobile terminal 1 into the domain name in the ENUM form, and registering the domain name into the DNS (ENUM) server 41.

The DNS (ENUM) server 41 performs conversion between a domain name and an IP address, and the DNS (ENUM) server 41 has the ENUM function of converting the phone number of a mobile terminal into a domain name in the ENUM form. The DNS (ENUM) server 41 is capable of searching the mobile terminal using the domain name.

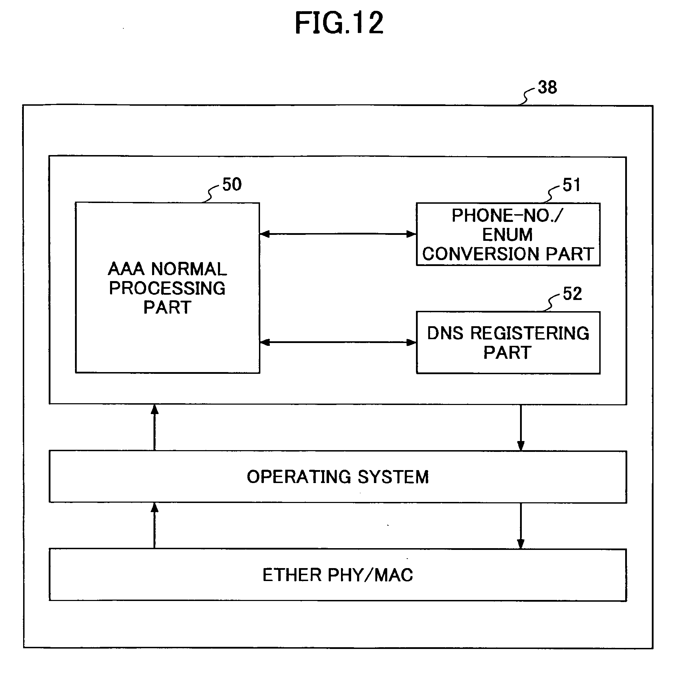

FIG. 12 is a diagram showing the functional composition of an AAA authentication server 38 in an embodiment of the invention. As shown in FIG. 12, an AAA normal processing part 50 is connected with the authenticator 37 to perform a normal user authenticating processing. At this time, the AAA normal processing part 50 is connected with the HSS 5 and acquire the subscriber data of the mobile terminal. A phone-number/ENUM conversion part 51 converts the phone number contained in the acquired subscriber data into a domain name in the ENUM form. A DNS registering part 52 is connected with the DNS (ENUM) server 18, and the DNS registering part 52 registers the domain name in the ENUM form and the HoA into the DNS (ENUM) server 18.

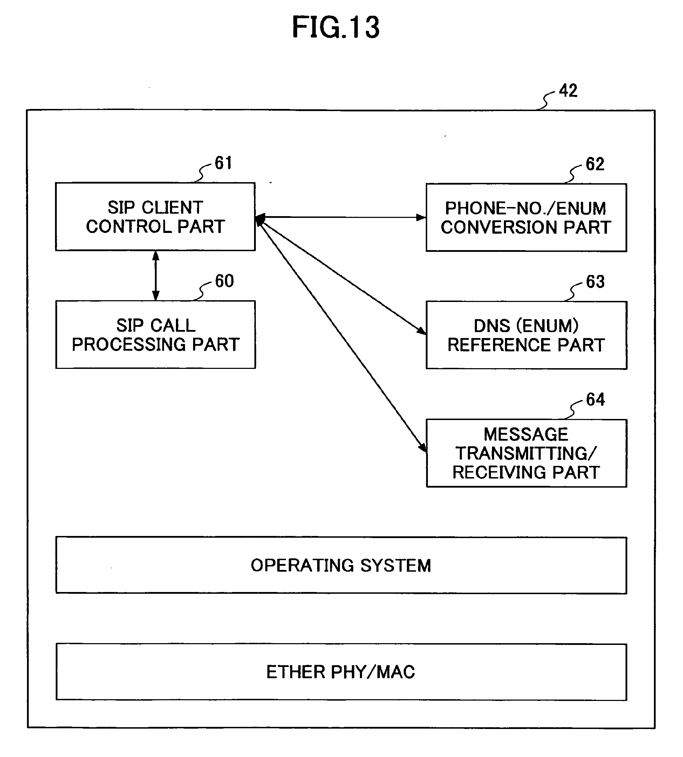

FIG. 13 shows the functional composition of an application server (AS) 42 in an embodiment of the invention. As shown in FIG. 13, an SIP call-processing part 60 is connected with the S-CSCF 4 or the S-CSCF 6 and performs a normal SIP call control processing. The SIP call-processing part 60 is connected with the SMSC 10 and transmits a short message to a mobile terminal.

Moreover, in the AS 42, an SIP client control part 61 is connected with the HSS 5 and acquires subscriber data etc. from the HSS 5. The SIP client control part 61 transmits an SIP message transmitted to the HA 36 and the S-CSCF 4 or 6 via a message transmitting/receiving part 64, and receives an SIP message from the HA 36 and the S-CSCF 4 or 6.

Moreover, in the AS 42, a phone-number/ENUM conversion part 62 converts the phone number contained in the subscriber data into a domain name in the ENUM form. A DNS reference part 63 is connected with the DNS (ENUM) server 18, and acquires HoA from the DNS (ENUM) server 18 by making reference to the DNS (ENUM) server 18 by using the domain name in the ENUM form. And a message transmitting/receiving part 64 is connected with the HA 36 and the S-CSCF 4, and transmits an SIP message to and receives an SIP message from the HA 36 and the S-CSCF 4.

FIG. 9 is a diagram for explaining the DNS registration in an embodiment of the invention. The AAA authentication server 38 performs the DNS registration of a mobile terminal in the DNS (ENUM) server 18 at the time of the network connection of mobile terminal 1 and the mobile IP setup.

In step S1, the mobile terminal 1 performs, when it is connected with a network, the authentication with the AAA authentication server 38 of the CSN 35 through the authenticator 37 of the ASN 30. At this time, the AAA authentication server 38 acquires the subscriber data of the mobile terminal 1 from the HSS 5, and acquires the certification information and service information of the mobile terminal 1.

Subsequently, in step S2, the mobile terminal 1 performs setup according to the mobile IP, and an IP address (HoA) is assigned to the mobile terminal 1. At this time, the HA 36 performs authentication (authentication concerning the mobile management service) with the AAA authentication server 38. The AAA authentication server 38 converts, into a domain name in the ENUM form, the phone number contained in the previously acquired subscriber data, and registers the domain name in the ENUM form and the HoA into the DNS (ENUM) server 18.

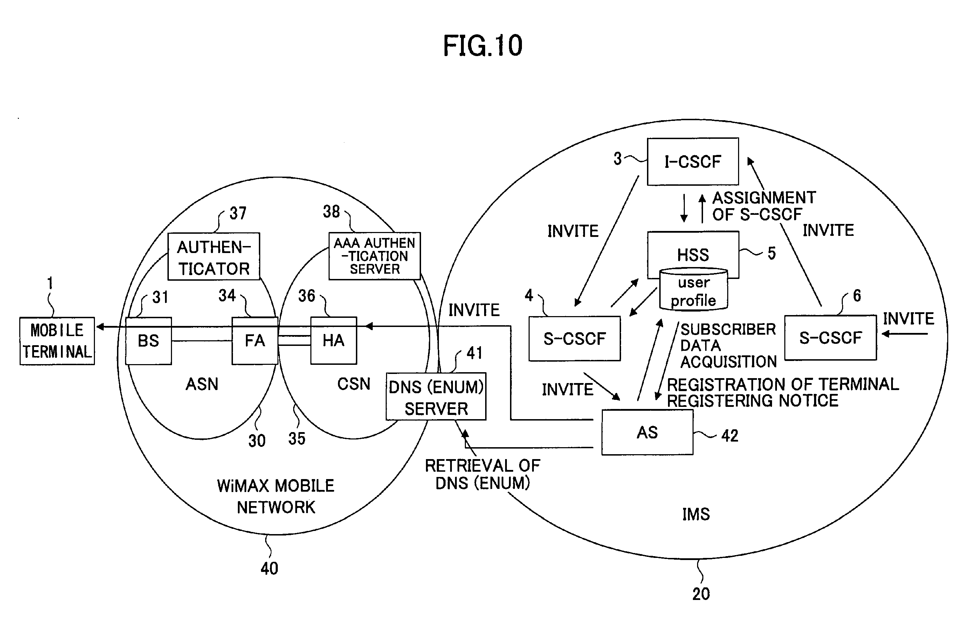

FIG. 10 is a diagram for explaining the message receiving processing to the non-registered mobile terminal in an embodiment of the invention.

In step S3, when the S-CSCF 6 of the transmitting side receives the INVITE message according to the SIP, the S-CSCF 6 transmit an INVITE message according to the SIP to the I-CSCF 3 in order to transmit the INVITE message according to the SIP to the S-CSCF 4 of the receiving side.

In step S4, the I-CSCF 3 makes an inquiry to the HSS 5 about the S-CSCF currently assigned to the mobile terminal 1. Since the mobile terminal 1 is not registered, the I-CSCF 3 newly assigns the S-CSCF 4 and transmits the INVITE message according to the SIP to the S-CSCF 4.

In step S5, since the S-CSCF 4 has no information about the mobile terminal 1, the S-CSCF 4 acquires subscriber data from the HSS 5. When execution of the transmission to the AS 42 is described in the subscriber data as operation at the time of receiving the message in the non-registered state, the S-CSCF 4 transmits the INVITE message according to the SIP to the AS 42.

In step S6, the AS 42 makes an inquiry to the HSS 5 and acquires subscriber data from the HSS 5. And the phone number contained in the acquired subscriber data is converted into the domain name in the ENUM form, the AS 42 searches the DNS (ENUM) server 18 using the domain name in the ENUM form, and acquires the HoA of the mobile terminal 1 from the DNS (ENUM) server 18.

In step S7, before transmitting a message to the HA 36, the AS 42 requests the HSS 5 to send back a notice of end of the IMS registration of the mobile terminal 1 to the AS 42. Subsequently, the AS 42 transmits the INVITE message according to the SIP to the HA 36 corresponding to the acquired HoA.

In step S8, the HA 36 transmits the INVITE message according to the SIP to the mobile terminal 1, whose IP address is equal to the HoA, through the FA 34 and the BS 31.

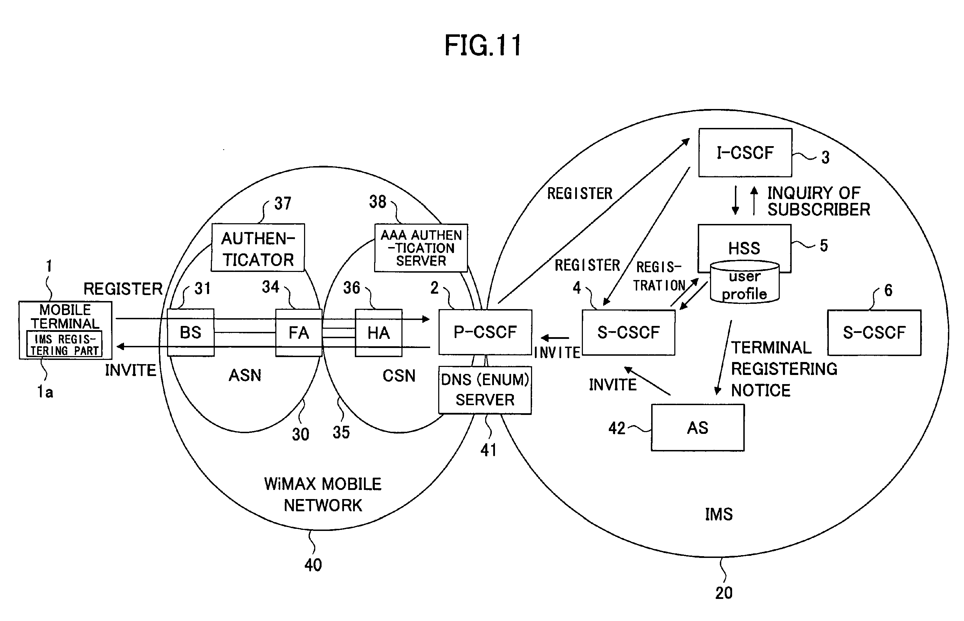

FIG. 11 is a diagram for explaining the call control processing which is performed upon retransmission of the INVITE message according to the SIP by the AS 42 after the mobile terminal 1 receives the INVITE message according to the SIP and performs the IMS registration.

In step S9, since the mobile terminal 1 is provided with the IMS registering part 1a which performs IMS registration upon receiving of an SIP message in the non-registered state, the mobile terminal 1 transmits a REGISTER message according to the SIP to the P-CSCF 2 in response to the INVITE message according to the SIP.

In step S10, the P-CSCF 2 transmits the REGISTER message according to the SIP to the I-CSCF 3, in order to assign the S-CSCF which takes charge of the call control of the mobile terminal 1.

In step S11, the I-CSCF 3 makes an inquiry to the HSS 5, the HSS 5 chooses the S-CSCF 4 already assigned to the P-CSCF 2, and the HSS 5 transmits the REGISTER message according to the SIP to the S-CSCF 4.

In step S12, the S-CSCF 4 registers its own address and subscriber identification information into the HSS 5, and acquires the subscriber data (user profile) from the HSS 5, so that preparation of the call control to the mobile terminal 1 is completed.

In step S13, the HSS 5 transmits a notice of end of registration of the mobile terminal 1 to the AS 42.

In step S14, the AS 42 transmits the INVITE message according to the SIP previously received from the S-CSCF 4, to the S-CSCF 4. The S-CSCF 4 transmits the INVITE message according to the SIP to the mobile terminal 1 through the P-CSCF 2, so that the arrival of the INVITE message according to the SIP to the mobile terminal 1 is completed.

According to the above embodiment, when a message to a mobile terminal which is not yet registered in the IMS is received, the IMS client within the mobile terminal is initiated so that the IMS registration can be performed and the message can be transmitted to the mobile terminal. Accordingly, a non-registered mobile terminal in an IP network is allowed to receive the message sent to the non-registered mobile terminal with certainty which is equivalent to that of the existing cellular phone system.

Since DNS searching is performed and a non-registered mobile terminal in an IP network is allowed to receive the message as for different applications other than the IMS, the present invention can be used in a wider range than in the case where a short message is used in the third generation network.

The DNS (ENUM) server 41 in the above embodiment is equivalent to a domain managing server in the claims. The DNS registering part 52 in the above embodiment is equivalent to a registration part in the claims. The HSS 5 in the above embodiment is equivalent to a subscriber management server in the claims. The phone-number/ENUM conversion parts 51 and 62 in the above embodiment are equivalent to an ENUM conversion part in the claims. The DNS reference part 63 in the above embodiment is equivalent to a reference part in the claims. The SIP client control part 61 and the message-sending part 64 in the above embodiment are equivalent to a registration request part, a notice request part and a received message transmitting part in the claims. And the IMS registering part 1a in the above embodiment is equivalent to a registration execution part in the claims.

## Claims

1. An authentication server comprising:
a network-connection authentication part configured to perform, when a mobile terminal is connected with a mobile network constructed by an IP network, a network-connection authentication of the mobile terminal;
a path setup part configured to perform a setup of a path from the mobile terminal to a home agent according to a mobile IP after the network-connection authentication is performed;
a mobile-management-service authentication part configured to perform a mobile-management-service authentication of the mobile terminal with the home agent after the setup of the path is performed; and
a registration part configured to register an IP address of the mobile terminal and a domain name of the mobile terminal to a domain managing server which manages IP addresses and domain names.

2. The authentication server according to claim 1, further comprising an ENUM conversion part configured to convert, into a domain name in an ENUM form, a phone number of the mobile terminal, which is acquired from a subscriber management server of the IP network when the network connection authentication of the mobile terminal is performed,
wherein the domain name into which the acquired phone number is converted in the ENUM form is registered into the domain managing server as the domain name of the mobile terminal.

3. An application server of an IP network to which a mobile network is connected, the application server comprising:
an ENUM conversion part configured to convert, when an incoming message to a non-registered mobile terminal is supplied to a subscriber management server of the IP network, a phone number of the mobile terminal into a domain name in an ENUM form; and
a reference part configured to acquire an IP address of the mobile terminal by making reference to a domain managing server using the domain name in the ENUM form produced by the ENUM conversion part.

4. The application server according to claim 3, wherein the application server is provided to use a session start protocol in the IP network.

5. The application server according to claim 4, further comprising a registration request part configured to transmit a registration request message to the mobile terminal having the IP address acquired by the reference part.

6. The application server according to claim 5, further comprising a notice request part configured to request, before the registration request message is transmitted by the registration request part, the subscriber management server to transmit a notice of end of registration of the mobile terminal to which the registration request message is transmitted, at a time of completion of the registration of the mobile terminal.

7. The application server according to claim 6, further comprising a received message transmitting part configured to transmit the received message to the mobile terminal when the notice of end of registration is received from the subscriber management server.

8. A mobile terminal for use with an application server of an IP network to which a mobile network is connected, the application server comprising:
an ENUM conversion part configured to convert, when an incoming message to a non-registered mobile terminal is supplied to a subscriber management server of the IP network, a phone number of the mobile terminal into a domain name in an ENUM form; and
a reference part configured to acquire an IP address of the mobile terminal by making reference to a domain managing server using the domain name in the ENUM form produced by the ENUM conversion part,
the mobile terminal comprising a registration execution part configured to transmit a registration message to the subscriber management server of the IP network when a registration request message is received from the subscriber management server.

9. A message receiving method of a mobile network built by an IP network, in which an application server is included in the IP network and an authentication server performs, when a mobile terminal is connected with the mobile network, a network connection authentication of the mobile terminal, performs a setup of a path from the mobile terminal to a path setup to a home agent according to a mobile IP, and performs a mobile management service authentication of the mobile terminal with the home agent after the setup of the path is performed, the message receiving method comprising:
causing the authentication server to convert, into a domain name in an ENUM form, a phone number of the mobile terminal which is acquired from a subscriber management server of the IP network when the network connection authentication of the mobile terminal is performed;
causing the authentication server to register the domain name into which the acquired phone number is converted in the ENUM form, into a domain managing server which manages IP addresses and domain names;
causing the application server to convert, when an incoming message to a non-registered mobile terminal is supplied to the subscriber management server of the IP network, a phone number of the non-registered mobile terminal into a domain name in the ENUM form;
causing the application server to acquire an IP address of the non-registered mobile terminal by making reference to the domain managing server using the domain name in the ENUM form ;
causing the application server to transmit a registration request message to the non-registered mobile terminal at the acquired IP address;
causing the non-registered mobile terminal to transmit a registration message to the subscriber management server of the IP network when the registration request message is received;
causing the application server to request, before transmitting the registration request message, the subscriber management server to transmit a notice of end of registration of the non-registered mobile terminal at a time of completion of the registration of the mobile terminal; and
causing the application server to transmit the incoming message to the non-registered mobile terminal when the notice of end of registration is received from the subscriber management server.

10. The message receiving method according to claim 9, wherein a session start protocol is used in the IP network.
